# EUROPÄISCHE PATENTSCHRIFT

(11) **EP 3 141 420 B1**
(45) Veröffentlichungstag und Bekanntmachung des Hinweises auf die Patenterteilung: **23.10.2019**
(21) Anmeldenummer: 16184734.8
(22) Anmeldetag: 18.08.2016
(51) Int. Cl.: B60P 1/64, B60P 1/04

(54) **AUFBAU FÜR WECHSELBEHÄLTER FÜR EIN LASTENTRANSPORTFAHRZEUG MIT BEWEGUNGSVARIATION UND VERFAHREN DAZU**
STRUCTURE FOR AN INTERCHANGEABLE CONTAINER FOR A LOAD CARRYING VEHICLE WITH MOVEMENT VARIATION AND METHOD FOR SAME
STRUCTURE D'UN RÉCIPIENT INTERCHANGEABLE POUR UN CAMION À VARIATION DE MOUVEMENT ET PROCÉDÉ ASSOCIÉ

(30) Priorität: 20.08.2015 DE 102015215917
(43) Veröffentlichungstag der Anmeldung: 15.03.2017
(73) Patentinhaber: Franz Xaver Meiller Fahrzeug- und Maschinenfabrik-GmbH & Co KG, 80997 München (DE)
(72) Erfinder: Stühler, Horst, 80939 München (DE)
(74) Vertreter: Weickmann & Weickmann PartmbB

(56) Entgegenhaltungen:
- AU-A4- 2009 100 034
- DE-A1- 10 063 610
- DE-U1-202005 015 649

## Beschreibung

Die Erfindung betrifft einen Aufbau für Wechselbehälter für ein Lastentransportfahrzeug, insbesondere für ein Abrollkipperfahrzeug oder für ein Absetzkipperfahrzeug, umfassend einen Grundrahmen und mindestens einen relativ zum Grundrahmen beweglichen Auslegerarm zum Abladen und/oder Kippen eines Behälters, mindestens eine Betätigungsvorrichtung zum Ausüben einer Kraft auf den mindestens einen Auslegerarm, eine Steuereinrichtung zur Steuerung der mindestens einen Betätigungsvorrichtung und eine Sensoranordnung. Die Erfindung betrifft ferner ein Fahrzeug umfassend einen solchen Aufbau und ein Verfahren zum Betrieb eines solchen Aufbaus.

Allgemein sind solche Aufbauten für Wechselbehälter für ein Lastentransportfahrzeug mit entsprechenden Steuereinrichtungen aus der DE 33 32 275 A1, der DE 29 03 462 C2 und der DE 196 37 891 A1 bekannt. Die darin beschriebenen üblichen Abrollkipperfahrzeuge weisen ein in der Fahrzeuglängsmitte vorgesehenen schwenkbaren Lasthebearm auf, der um eine horizontale und quer zur Fahrzeuglängsrichtung verlaufende Schwenkachse zwischen einer ersten Schwenkstellung und einer zweiten Schwenkstellung schwenkbar ist und an seinem von der Schwenkachse entfernten Ende einen Hakenarm mit einem daran vorgesehenen Haken aufweist, der mit einer komplementären Öse eines Wechselbehälters in Eingriff zu bringen ist. In einer normalen Fahrtstellung stützt sich der Wechselbehälter auf den Fahrzeugaufbau bzw. einem Basisrahmen ab, wobei der Lasthebearm im Wesentlichen horizontal liegt und sich der Hakenarm vom Lasthebearm vertikal nach oben zur Öse des Wechselbehälters erstreckt. Soll nun ein solcher Wechselbehälter vom Fahrzeug abgeladen werden, so ist dies dadurch zu erreichen, dass der Lasthebearm aus seiner ersten Schwenkstellung um seine Schwenkachse herum und über eine näherungsweise aufrechte Totpunktlage hinweg in eine zweite Schwenkstellung verschwenkt wird. Bei einem solchen Schwenkvorgang kann der Wechselbehälter an Rollen, die sich am Fahrzeugheck befinden, abrollen und sich dabei nach und nach weiter vom Fahrzeugaufbau entfernen, bis der Wechselbehälter vollständig auf dem Boden hinter dem Fahrzeug abgesetzt worden ist. Als Schwenkantriebsmittel für den Lasthebearm sind bei Abrollkipperfahrzeugen normalerweise zwei doppelt wirkende hydraulische Zylinder vorgesehen. Die hydrau - lischen Zylinder sind mit ihren entgegengesetzten Enden einerseits an ei - nem rahmenfesten Aufbau des Fahrzeugs und andererseits am schwenkbaren Lasthebearm angelenkt, wobei sie im Wesentlichen parallel zueinander angeordnet und mechanisch zum Gleichlauf gekoppelt sind. Das Verschwenken des Lasthebearms erfolgt durch Ausfahren bzw. Einziehen der Kolbenstangen der hydraulischen Zylinder, wobei hierzu die doppelt wirken - den Zylinder mit Hydraulikfluid von einer Hydraulikpumpe beaufschlagt werden. Die hydraulische Pumpe ist über ein hydraulisches Leitungssystem mit darin befindlichen Lasthalteventilen mit den Zylindern verbunden. Rücklauf - leitungen mit darin befindlichen Gegenhalteventilen dienen dazu, aus den Zylindern verdrängtes Hydraulikfluid in einen Tank zurückzuführen.

Aus der DE 100 63 610 A1 ist es bekannt, dass schwenkbare Lasthebearme bzw. Auslegerarme bei Absetzkipperfahrzeugen und bei Abrollkipperfahrzeugen in einem Eilgang betrieben werden können. In dem üblicherweise nur über einen begrenzten Schwenkwinkelbereich zu wählenden Eilgangsbetrieb kann die Lasthebearmanordnung mit größerer Geschwindigkeit verschwenkt werden, als dies in einem Normalbetrieb der Fall ist. Der Eilgang - betrieb ist üblicherweise nur für den Fall geringer Belastung der Lasthebear - me zulässig. Soll ein mit schwerer Last beladener Behälter mittels eines betreffenden Lasthebearms vom Fahrzeug abgeladen bzw. auf das Fahrzeug aufgeladen werden, so wird dies im Normalbetrieb erfolgen. Das Verschwenken des Lasthebearms ohne Behälter bzw. mit einem unbeladenen Behälter kann dem gegenüber im Eilgangbetrieb durchgeführt werden.

Aus der DE 10 2004 025 928 A1 ist eine Steuereinrichtung zur Steuerung einer hydraulischen Antriebseinrichtung einer Schwenkarmanordnung bekannt, wobei die Steuereinrichtung zur Einstellung des Eilgangsbetriebs dazu eingerichtet ist, den Hydraulikzufluss von einer Druckfluidquelle zu ei - nem ersten von zwei Zylindern zu vermindern oder ggf. zu sperren, um den Hydraulikfluidzufluss von der Druckfluidquelle zu dem anderen Zylinder zu vergrößern.

Die EP 1 702 792 A2 offenbart ein Hubgerät für Wechselbehälter auf einem Lastentransportfahrzeug mit einem Teleskopzylinder, der als Schwenkantriebsmittel für eine Schwenkmechanik zum Auf- und Abladen eines Wechselbehälters dient. Der Teleskopzylinder weist zwei Stufen auf, mit denen jeweils verschieden große Kräfte und Wege realisiert werden können. Um ungünstige Hebelverhältnisse zu Beginn des Abladens eines Wechselbehälters zu kompensieren, wird zunächst eine Teleskopzylinderstufe mit großer Kraft und kurzem Hubweg aktiviert, bis bessere Hebelverhältnisse und gerin - gere Lasten an dem Teleskopzylinder erreicht sind. Dann tritt die zweite Te - leskopzylinderstufe in Kraft, die mit geringeren Kräften einen längeren Hub - weg realisiert.

Aus der DE 10 2013 208 124 A1 ist ein Hubgerät für Wechselbehälter für ein Lastentrasportfahrzeug bekannt, das als Betätigung zwei hydraulische Zylin - der umfasst, die jeweils als Doppelzylinder mit jeweils zwei doppelt wirkenden Einzelzylindern ausgelegt sind, wobei die Einzelzylinder in dem Doppel - zylinder so miteinander verbunden sind, dass sich bei Betätigung eines oder beider Einzelzylinder deren Arbeitshübe zu einem Gesamtarbeitszub des Doppelzylinders addieren oder subtrahieren.

Weitere bekannte Aufbauten eines Teleskopzylinders sind in der US 5,694,827 und in der AU 2009 100 034 A4 erläutert.

Allen diesen bekannten Lösungen für verschiedene Betriebsarten zum Auf- und Absetzen von Wechselbehältern und für den Aufbau der entsprechenden Betätigungsvorrichtungen weisen den Nachteil auf, dass die verschiede - nen Betriebsarten nicht optimiert erfolgen, denn sie sind im Wesentlichen nur fest mechanisch und/oder durch Drucksensoren bestimmt, welche insbesondere bei einer Neigung des Fahrzeugs in Fahrzeuglängsrichtung zu ei - ner falschen Festlegung der Bereiche für die verschiedenen Betriebsarten führen. Damit sind die bisherigen Systeme noch nicht optimal und führen insbesondere zu einem langsameren Auf- und Absetzen der Wechselbehälter, insbesondere der leeren. Ferner benötigen die Vorrichtungen zusätzli - che mechanische Schalter, um den Absetzvorgang nach dem beschleunigten Eilgangbetrieb geeignet bei Annäherung an die Absetzposition abzu - bremsen, was für die Vermeidung von Beschädigungen des Behälters, des Bodens oder des Fahrzeugs erforderlich ist. Diese mechanischen Schalter sind allerdings störanfällig und verschleißen sehr schnell.

Aufgabe der vorliegenden Erfindung ist es somit, die im Stand der Technik auftretenden Nachteile zu überwinden, insbesondere einen Aufbau und ein Verfahren zur Steuerung eines Aufbaus anzugeben, bei dem auch bei entsprechendem Gefälle ein schnelles Auf- und Absetzen von Behältern und Bewegen der Auslegerarme möglich ist.

Diese Aufgabe wird gelöst durch einen Aufbau gemäß Ansprüche 1 und 2, einem Fahrzeug gemäß Anspruch 7 und ein Verfahren gemäß Anspruch 8. Vorteilhafte Ausgestaltungen sind Gegenstand der abhängigen Ansprüche.

Der erfindungsgemäße Aufbau für Wechselbehälter für ein Lastentransportfahrzeug, insbesondere für ein Abrollkipperfahrzeug oder für ein Absetzkip - perfahrzeug, umfasst einen Grundrahmen und mindestens einen relativ zum Grundrahmen beweglichen Auslegerarm zum Abladen und/oder Kippen eines Behälters, mindestens eine Betätigungsvorrichtung zum Ausüben einer Kraft auf den mindestens einen Auslegerarm, eine Steuereinrichtung zur Steuerung der mindestens einen Betätigungsvorrichtung und eine Sensoranordnung. Der erfindungsgemäße Aufbau zeichnet sich dadurch aus, dass die Sensoranordnung einen Winkelsensor zur Messung des Winkels bzw. der Neigung gegenüber dem Erdschwerefeld umfasst, bevorzugt an oder im Auslegerarm, und dass die Steuereinrichtung dafür eingerichtet ist, in einer Nullpunktsstellung des Auslegerarms den vom Winkelsensor gemessenen Winkel als einen relativen Winkelnullpunktswert zu erfassen, bevorzugt au - tomatisch, und eine Steuerung der mindestens einen Betätigungsvorrichtung in Abhängigkeit von der Winkeldifferenz des vom Winkelsensor gemessenen Winkels und des Winkelnullpunktswertes zu variieren, wobei der Win - kelsensor bevorzugt ein Neigungssensor und/oder ein Beschleunigungssen - sor ist.

Durch das Erfassen eines Winkelnullpunktswertes in einer Nullpunktsstel - lung des Auslegerarms ist es möglich mit Hilfe des Winkelsensors anschließend immer die tatsächliche Winkelposition des Auslegerarms innerhalb des gesamten von dem Auslegerarm bei einer vollständig durchgeführten Bewegung überstrichenen Winkelbereichs zu bestimmen, wodurch viel präziser die Bereiche für die verschiedenen Betriebsarten festgelegt werden können.

Vorteilhaft ist insbesondere, dass der Winkelsensor zur Messung des Win - kels gegenüber dem Erdschwerefeld technisch einfach zu realisieren ist und an einer geschützten Stelle im oder am Auslegerarm angeordnet werden kann. Hingegen sind Winkelsensoren, die direkt den Winkel zwischen Aus - legerarm und Fahrzeug bzw. Basisrahmen messer technisch komplexer und von der Lebensdauer begrenzter.

Dabei ist die Nullpunktsstellung des Auslegerarms bevorzugt die Position, bei der der Auslegerarm dem Grundrahmen am nächsten ist und/oder bei der der Winkel zwischen Auslegerarm und Grundrahmen minimal ist. Dies ist insbesondere so zu verstehen, dass die Nullpunktsposition die Position sein kann, bei der der Auslegerarm in seiner vollständig eingezogenen bzw. eingeklappten Stellung bzw. der Transportstellung ist. In dieser Position liegt ein Teil des Auslegerarms am Rahmen selbst an und ein evtl. vorhandener Behälter ist auf dem Grundrahmen bzw. auf einem Rahmen des Fahrzeugs positioniert und abgestützt. Diese Position als Nullpunktssposition zu wählen ist besonders vorteilhaft, da üblicherweise beim Einschalten der Betäti - gungsvorrichtung der Auslegerarm in dieser Position sein wird, denn es ist aus Sicherheitsgründen erforderlich, dass während das Fahrzeug fährt der Auslegerarm in dieser Position ist.

Bevorzugt umfasst die Sensoranordnung noch einen Näherungssensor am Auslegerarm und/oder dem Grundrahmen. Da sowohl der Auslegerarm als auch der Grundrahmen vorzugsweise aus einem Metall sind, lässt sich somit insbesondere bei Auslegung des Näherungssensors als induktiver Nähe - rungssensor zuverlässig bestimmen, ob der Auslegerarm in der Nullpunktsstellung ist und ob somit der aktuelle Wert des Winkelsensors als Winkel - nullpunktswert zu erfassen ist.

Bevorzugt variiert die Steuereinrichtung die Steuerung bzw. die Ansteuerung der mindestens einen Betätigungsvorrichtung so, dass die Geschwindigkeit der Bewegung des Auslegerarms in Abhängigkeit von der Winkeldifferenz variiert wird. Dies bedeutet insbesondere, dass die Steuereinrichtung dazu eingerichtet sein kann, bei bestimmten Winkeldifferenzen bestimmte Betriebsarten zu fahren. Dies kann auch umfassen, dass entsprechend die Betätigungsvorrichtung in anderer Weise angesteuert wird und entsprechend Elemente der Betätigungsvorrichtung in Abhängigkeit von der Winkeldiffe - renz speziell angesteuert werden oder aktiviert werden oder nicht aktiviert werden. Bei der Variierung der Geschwindigkeit werden bevorzugt die Ge - schwindigkeitsprofile Eilgang zur schnellen Bewegung eines leeren Behäl - ters, Normalbetrieb insbesondere für beladene Behälter und Endlagendämpfungsbetrieb zum stoßreduzierten Absetzen eines Behälters auf dem Grundrahmen oder einem Boden verwendet. Damit ist ein optimiertes Auf- und Absetzen möglich, denn in entsprechend unproblematischen Winkelbereichen der Bewegung des Auslegerarms kann der Auslegerarm mit einer entsprechend höheren Geschwindigkeit gefahren werden, während in kritischen Bereichen, in denen die Betätigungsvorrichtung einen schlechten Hebel hat oder in denen aus Sicherheitsgründen eine langsame Bewegung erforderlich ist, kann der Behälter entsprechend langsamer und/oder mit einem höheren Kraftaufwand gefahren werden.

Dabei umfasst die mindestens eine Betätigungsvorrichtung hydraulische Zylinder, wobei der Aufbau eine von der Steue - rung ansteuerbare Druckfluidquelle umfasst, die hydraulische Zylinder mit Hydraulikfluid unter Druck versorgen kann, um den mindestens einen Auslegerarm zu bewegen. Alternativ kann für bestimmte Anwendungen der Aufbau auch nur mit einem entsprechenden Leitungssystem versehen sein, das dann an eine weitere von dem Aufbau separate Druckfluidquelle angeschlossen wird. Die Verwendung von hydraulischen Zylindern für die Betätigungsvorrichtung ist dabei vorteilhaft, da hydraulische Zylinder entsprechende Kräfte zur Bewegung schwerer Lasten aufbringen können.

Die Betätigungsvorrichtung umfasst nach Anspruch 1, zwei hydraulische Zylinder, wobei zur schnellen Bewegung in einem Eilgang die Steuerung die Druckfluidquelle so ansteuern kann, dass die Versorgung mit Hydraulikfluid zu allen Hydraulikzylindern bis auf einen Eilhydraulikzylinder verringert und/oder gesperrt ist und für den einen Eilhydraulikzylinder erhöht ist. Dies erlaubt es einen besonders schnellen Betrieb im Eilgang mit Hilfe mehrerer Hydraulikzylinder zu realisie - ren.

Bevorzugt umfasst dabei die Senoranordnung auch noch einen Drucksensor, der einen Druck auf einer und/oder beider Seiten und/oder die Druckdifferenz zwischen den beiden Seiten eines Kolbens eines Hydraulikzylinders, bevorzugt des Eilhydraulikzylinders, misst, wobei die Steuerung dazu einge - richtet ist, den Eilgang in Abhängigkeit von dem Druck und/oder der Druckdifferenz zu blockieren und/oder freizugeben. Diese Lösung ist vorteilhaft, um unmittelbar die Problematik abzufangen, dass bei schwerer Behälterbeladung der Eilgang nicht gefahren werden kann, da im Eilgang zu wenig Kraft aufgebracht wird. Ob und wieviel Kraft aufgebracht werden muss zeigt umittelbar an, ob der Behälter zu schwer beladen ist für den Eilgangbetrieb. Es kann aber auch vorgesehen sein, dass der Winkelbereich, in dem der Eilgangbetrieb erfolgt, in Abhängigkeit von dem vom Drucksensor gemessenen Daten vergrößert oder verkleinert wird. Insbesondere kann aber auch der Bereich des Eilgangbetriebs fest vorgegeben sein und entsprechend nur blockiert werden, wenn der Druck bzw. die Druckdifferenz zu groß wird, insbesondere auch nur abschnittsweise innerhalb des Bereichs des Eilgangbetriebs.

Die Steuereinrichtung ist nach Anspruch 2 dazu eingerichtet, die Versorgung mit Hydraulikfluid für alle hydraulischen Zylinder gleichmäßig zu verringern, um ein stoßreduziertes Absetzen eines Behälters in einem Endlagendämpfungsbetrieb zu realisieren. Dabei ist bevorzugt die Steuerung dafür eingerichtet, von einem Eilgangbetrieb mit nur einem voll mit Hydraulikfluid versorgten Hydraulikzylinder in einen Endlagendämpfungsbetrieb umzustellen, indem die Versorgung der im Eilgangbetrieb nicht mit Druckfluid versorgten hydrau - lischen Zylinder wieder geöffnet wird. Durch die gleichmäßige Verringerung der Versorgung mit Hydraulikfluid kann dann ein sanftes Absetzen eines schweren Behälters ermöglicht werden, wodurch Beschädigungen vorgebeugt wird. Da bei leichten Behältern ein besonders großer Bereich der Schwenkbewegung des Auslegerarms im Eilgang durchfahren werden kann, kann es dabei vorteilhaft sein durch die vorher beschriebene technische Maßnahme einen direkten Übergang in den Endlagendämpfungsbetrieb zu realisieren.

Ferner umfasst der Aufbau bevorzugt Bedienelemente oder Mittel zur kabelbasierten oder kabellosen Verbindung mit nicht zum Aufbau gehörigen Bedienelementen, um eine Steuerung der Steuereinrichtung zu ermöglichen. Dabei sind die Bedienelemente oder die Mittel zur Verbindung so eingerich - tet und mit der Steuereinrichtung verbunden, dass durch die Bedienelemente ein Benutzer die Bewegung des Auslegerarms steuern kann und/oder eine Erfassung des Winkelnullpunktwerts auslösen kann, bevorzugt in der Nullpunktsstellung. Alternativ oder zusätzlich kann auch vorgesehen sein, dass der Benutzer mit den Bedienelementen die Erfassung des Winkelnullpunktwertes blockieren kann, manuell einen Winkelnullpunktwert vorgibt oder vollständig den Auslegerarm im Normalbetrieb fahren lässt. Dies kann vorteilhaft sein, wenn besondere Umstände zu Ungenauigkeiten des Winkelmessers führen, beispielsweise wenn der Winkelmesser beschädigt ist.

Ein erfindungsgemäßes Fahrzeug umfasst mindestens einen erfindungsgemäßen Aufbau, wobei dieser bevorzugt so ausgelegt ist, dass ein Abrollkipperfahrzeug oder ein Absetzkipperfahrzeug ausgebildet ist.

Dabei kann sich selbstverständlich die Auslegung der Steuereinrichtung in Bezug auf Abrollkipperfahrzeug und Absetzkipperfahrzeug dahingehend unterscheiden, dass die Steuerung der mindestens einen Betätigungsvorrichtung in Abhängigkeit von der Winkeldifferenz bei Abrollkipperfahrzeug und Absetzkipperfahrzeug anders variiert wird und insbesondere dass die Steue - rung der mindestens einen Betätigungsvorrichtung in Abhängigkeit von der Winkeldifferenz beim Abrollkipperfahrzeug unterschiedlich variiert wird, je nach dem ob gerade ein Kippvorgang stattfindet, bei dem der Auslegerarm als Ganzes bewegt wird, oder ein Abrollvorgang, bei dem nur ein Unterbereich des Auslegerarms bewegt wird. Insbesondere kann bei dem erfindungsgemäßen Aufbau wie bei dem erfindungsgemäßen Fahrzeug die Steuereinrichtung dafür eingerichtet sein, abhängig vom ausgewählten Vorgang in entsprechend anderen Winkelbereichen den Eilgang und den Endlagendämpfungsbetrieb durchzuführen.

Bei einem erfindungsgemäßen Fahrzeug kann insbesondere der Aufbau auch Teil des Fahrzeugs sein, insbesondere in der Art, dass Elemente, die oben als Teil des Aufbaus beschrieben sind, gleichzeitig Teil des restlichen Fahrzeugs sind. Beispielsweise kann der Grundrahmen des Aufbaus gleichzeitig ein Teil des sowieso vorhandenen Rahmens des Fahrzeugs sein. Es ist also erfindungsgemäß sowohl vorgesehen, dass der erfindungsgemäße Aufbau ein separates Element ist, das entsprechend zur Ausbildung eines erfindungsgemäßen Fahrzeugs auf einem Fahrzeug montierbar ist, als auch dass ein erfindungsgemäßes Fahrzeug integral einen erfindungsgemäßen Aufbau umfasst.

Die Erfindung betrifft ferner ein Verfahren zum Betrieb eines bekannten Aufbaus eines Fahrzeugs sowie eines erfindungsgemäßen Aufbaus eines Fahrzeugs. Das Verfahren umfasst die Schritte:
Erfassen des von einem Winkelsensor der Sensoranordnung gemessenen Winkels in einer Nullpunktsstellung des Auslegerarms als einen relativen Winkelnullpunktswert;
Betätigen der mindestens einen Betätigungsvorrichtung zur Bewegung des mindestens einen Auslegerarms; und
Steuerung der Bewegung des mindestens einen Auslegerarms in Abhängigkeit von der Winkeldifferenz des vom Winkelsensor aktuell ge - messenen Winkels und des Winkelnullpunktwertes.

Dabei erfolgt bevorzugt der erstgenannte Schritt beim Einschalten der Steuerungsvorrichtung bzw. der mindestens einen Betätigungsvorrichtung, denn üblicherweise wird die entsprechende Steuervorrichtung nur einge - schaltet, wenn der Auslegerarm vollständig zum Aufbau hin gedreht ist oder vollständig von diesem weg gedreht ist, denn dieses entspricht den beiden erwünschten Positionen eines Behälters, beispielsweise dem aufgeladenen und abgeladenen Zustand. In diesen Positionen und insbesondere in der ersteren Position lässt sich sinnvoll ein Winkelnullpunktswert festlegen, der für das weitere Verfahren nutzbar ist. Allerdings kann auch alternativ vorge - sehen sein, dass einfach ein früherer Nullpunktswert verwendet wird, wenn seit dem keine Bewegung des Auslegerarms oder des Fahrzeugs stattgefunden hat.

Insbesondere kann dieses Erfassen eines relativen Winkelnullpunktswertes unmittelbar mit dem Befehl des Betätigens der mindestens einen Betätigungsvorrichtung zur Bewegung des mindestens einen Auslegerarms ausgelöst werden. Dabei kann insbesondere vorgesehen sein, dass der bisherige Winkelnullpunktswert weiter verwendet wird, solange bis der Winkelsen - sor einen Winkel misst, der einer zulässigen Nullpunktsstellung entspricht, wobei die zulässige Nullpunktsstellung insbesondere die ist, bei dem der Auslegerarm vollständig zum Aufbau hin geklappt ist. Dies bietet den Vorteil, dass wenn in Zwischenpositionen das System abgeschaltet wird anschließend der bisherige Winkelnullpunktswert weiterverwendet wird, so lange bis der Auslegeram wieder in einer Position ist, in der ein neuer Winkelnull - punktswert bestimmt werden kann. Welche Positionen das sind, richtet sich nach der genauen Funktionsweise des Aufbaus und der Bewegungen des Behälters, bei einem Abrollkipper ist dies beispielsweise insbesondere die Position, in der der Auslegerarm und der Behälter vollständig an dem Fahrzeug positioniert sind.

Die Steuerung der Bewegung des mindestens einen Auslegerarms in Abhängigkeit von der Winkeldifferenz kann insbesondere bedeuten, dass bei bestimmten Winkeln feste Betriebsmodi gefahren werden, kann aber auch bedeuten, dass sich Geschwindigkeit oder Betriebsmodus kontinuierlich oder entsprechend nach geeigneten mathematischen Formeln ändern. Insbesondere kann vorgesehen sein, dass im Eilgangbetrieb die Erhöhung der Zufuhr von Hydraulikfluid zu dem Eilhydraulikzylinder und die Verringerung für alle anderen Hydraulikzylinder entsprechend einer Formel erfolgt, die sich nach dem aktuell ausgeübten Druck des Behälters, also im Prinzip nach dem Gewicht des Behälters, und der aktuellen Länge des Hebelarms bezogen auf den Angriffspunkt der Hydraulikzylinder richtet, insbesondere so, dass umso mehr Hydraulikfluid exklusiv auf den Eilhydraulikzylinder gelegt ist, je geringer die vor allem hinsichtlich der Hebelgesetze aufzubringende Kraft am Angriffspunkt des Eilhydraulikzylinders ist.

Das erfindungsgemäße Verfahren kann insbesondere auch eine automatische oder zwingend vorgeschriebene Erfassung des Winkelnullpunktswertes umfassen, wenn der Auslegerarm in der Nullpunktsstellung ist.

Das erfindungsgemäße Verfahren nach Anspruch 8 umfasst die Unterteilung eines gesamten Verfahrwinkels des Auslegerarms gegenüber dem Grundrahmen in mindestens drei Bereich umfassen, wovon mindestens einer ein Endlagendämpfungsbereich, mindestens einer ein Normalbetriebsbereich und mindestens einer ein Eilgangbereich ist, wobei die Steuerung der Bewegung in Abhän - gigkeit von der Winkeldifferenz so ausgeführt wird, dass die Bewegung in ei - nem Eilgang betrieben werden kann, wenn die Winkeldifferenz in den Eilgangsberech fällt, dass die Bewegung in einem Endlagendämpfungsbetrieb betrieben werden kann, wenn die Winkeldifferenz in den Endlagendämpfungsbereich fällt, und dass die Bewegung in einem Normalbetrieb betrieben werden kann, wenn die Winkeldifferenz in den Normalbetriebsbereich fällt und/oder keine andere Betriebsart verwendet wird. Dabei wird bevorzugt ins - besondere dann die Bewegung in einem Eilgang betrieben, wenn die Winkeldifferenz in den Eilgangbereich fällt und wenn gleichzeitig das Gewicht des Behälters nicht zu groß ist bzw. der Druck auf die Hydraulikzylinder nicht zu groß ist. Ferner wird ein Endlagendämpfungsbetrieb bevorzugt dann ausgeführt, wenn die Winkeldifferenz in den Endlagendämpfungsbereich fällt und wenn gerade der Vorgang des Absetzens oder Ablegens eines Behälters erfolgt. Dies bedeutet insbesondere auch, dass bevorzugt der Normalbetrieb nicht nur im Normalbetriebsbereich stattfindet, sondern auch im Eilgangbereich stattfindet, wenn das Gewicht des Behälters zu groß ist bzw. wenn der Druck auf die Hydraulikzylinder zu groß ist, und dass der Normal - betrieb in dem Endlagendämpfungsbereich stattfindet, wenn gerade kein Behälter abgesetzt werden soll, also insbesondere wenn ein Behälter gerade angehoben werden soll.

Erfindungsgemäß kann aber auch der Übergang zwischen den verschiedenen Betriebsarten kontinuierlich sein, insbesondere so, dass der Endlagen - dämpfungsbetrieb kontinuierlich zum Normalbetrieb hin gesteuert oder weg gesteuert wird und dass ebenso der Eilgang in kontinuierlicher Weise aus dem Normalbetrieb heraus hochgefahren und entsprechend wieder zum Normalbetrieb zurückgefahren wird.

Bevorzugt umfasst das Verfahren ferner das Erfassen eines von einem Drucksensor gemessenen Drucks und/oder einer vom Drucksensor gemessenen Druckdifferenz eines hydraulischen Kolbens, wobei der Eilgangbe - reich in Abhängigkeit von dem gemessenen Druck variiert wird, wobei er bevorzugt bei umso größerem Druck umso kleiner ist und insbesondere auch verschwinden kann. Das Erfassen dieses Drucks kann insbesondere kontinuierlich erfolgen oder an bestimmten Winkeln, die vom Winkelsensor gemessen werden, gekoppelt sein. Diese Winkel für die Druckmessung sind bevorzugt insbesondere solche, bei denen aufgrund des Aufbaus der Hydraulikzylinder und der Geometrie des Auslegerarms und des Behälters das Gewicht des Behälters in zuverlässiger Weise aus den am Hydraulikzylinder gemessenen Druck oder der Druckdifferenz bestimmt werden kann.

Hierbei ist mit Verschwinden des Eilgangsbereichs insbesondere gemeint, dass der Eilgang auch vollständig blockiert werden kann bei entsprechend großem Druck bzw. bei entsprechend großem Behältergewicht, so dass der Behälter in keiner Winkelposition im Eilgang bewegt wird. Ferner kann der Eilgang auch kontinuierlich überprüft werden, so dass ständig oder bei ge - wissen Winkeln der Druck geprüft wird und bei entsprechenden zu großem Druck bzw. Druckdifferenz der Eilgang direkt blockiert bzw. zum Normalbetrieb heruntergefahren wird.

Erfindungsgemäß kann aber auch vorgesehen sein, dass der Eilgangsbereich entsprechend des gemessenen Drucks bzw. der Druckdifferenz verändert und insbesondere kontinuierlich angepasst wird, was besonders vorteil - haft ist, wenn ein Behälter abgesetzt wird, sich seine Beladung ändert und er dann wieder aufgesetzt werden soll bzw. umgekehrt.

Ein Ausführungsbeispiel der Erfindung wird nachstehend unter Bezugnahme auf die Figuren näher erläutert.
- Figur 1: zeigt einen Aufbau eines Abrollkipperfahrzeuges in einer perspektivischen Darstellung mit in einer ersten Schwenkstellung (Grundstellung bzw. Nullpunktsstellung) befindlichem Auslegerarm.
- Figur 2: zeigt die Wechselvorrichtung aus Figur 1 mit vollständig nach hinten in der zweiten Schwenkstellung ausgelenktem Auslegerarm.
- Figuren 3a - 3c: zeigen in skizzenhaften Momentaufnahmen den Abrollvorgang beim Abrollen eines Behälters von einem erfindungsgemäßen Fahrzeug.
- Figur 4: zeigt den Aufbau aus den Figuren 1 und 2 in einer Kippstellung.
- Figur 5: zeigt in einer skizzenhaften Darstellung ein erfindungsgemäßes Abrollkipperfahrzeug, bei dem ein Behälter mit einem entsprechenden erfindungsgemäßen Aufbau in die Kippstellung gebracht worden ist.
- Figur 6: zeigt in schematischer Weise den Ablauf eines erfindungsgemäßen Verfahrens zur Steuerung eines erfindungsgemäßen Aufbaus.

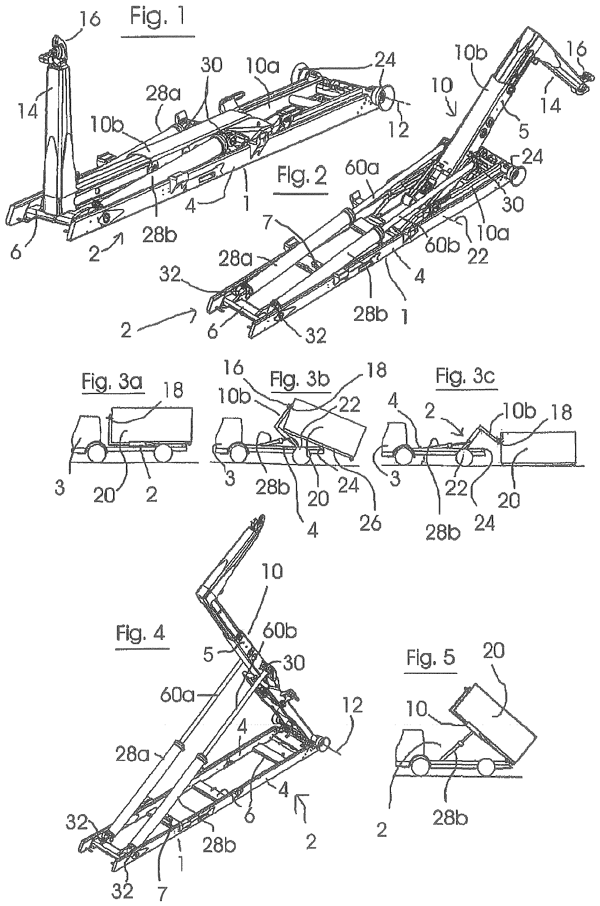

Der in den Figuren 1 - 5 dargestellte Aufbau 2 umfasst einen Basisrahmen 1 aus Längsträgern 4 und Querstreben 6. Der zwischen den Längsträgern 4 vorgesehene Auslegerarm 10 erstreckt sich in der in Figur 1 gezeigten Grundstellung bzw. Nullpunktsstellung von der Quer- zur Fahrzeuglängsrich - tung liegenden heckseitigen Kippachse 12 nach vorne und weist an seinem von der Kippachse 12 entfernten Ende einen orthogonal nach oben abgewinkelten Hakenarm 14 mit einem Haken 16 zur Ineingriffnahme einer komplementären Öse 18 eines Behälters 20 auf (vgl. Figuren 3a - 3c).

Der Auslegerarm 10 weist einen kippachsennahen Armabschnitt 10a und einen an dessen von der Kippachse 12 entfernten Ende um eine zur Kippachse 12 parallele Knickachse 22 schwenkbar gelagerten zweiten Armabschnitt 10b auf.

Aus den Figuren 3a - 3c ist zu ersehen, dass ein auf dem Basisrahmen des Aufbaus 2 auf dem Fahrzeug 3 aufgenommener Behälter 20 durch Verschwenken des zweiten Armabschnitts 10b um die Knickachse 22 vom Fahrzeug abgesetzt werden kann. Dabei gelangt der zweite Armabschnitt 10b von der in Figur 1 gezeigten Grundstellung in die in Figur 2 gezeigte Ausle - gerstellung. Der Behälter rollt beim Absetzen auf den Rollen 24 des Aufbaus mit seinen Behälterkuven 26 ab.

Zur Aufnahme des hinter dem Heck eines Fahrzeugs 3 stehenden Behälters 20 können die anhand der Figuren 3a - 3c gezeigten Bewegungsabläufe umgekehrt werden.

In einer Kippbetriebsart gemäß den Figuren 4 und 5 sind die beiden Armabschnitte 10a und 10b starr miteinander verriegelt, so dass die zum Absetzen und Aufnehmen eines Behälters genutzte Knickoption des Auslegerarms 10 unterdrückt ist. Der Behälter 20 kann somit am Fahrzeug 3 in eine Kippstellung gemäß Figur 5 gebracht werden.

Ungeachtet dessen, ob der Auslegerarm in der in den Figuren 1 - 3c gezeigten Weise oder in der in Figur 4 und 5 gezeigten Weise bewegt wird, durch - streicht er jeweils von der Grundstellung aus bis zur Auslegerstellung bzw. Kippstellung jeweils einen bestimmten Winkelbereich bzw. einen bestimmten Verfahrwinkel gegenüber dem Grundrahmen. Angetrieben wird dies durch eine Betätigungsvorrichtung 28a, 28b, die zwei hydraulische Zylinder 28a, 28b umfasst. Diese sind mit ihren Kolbenstangenenden 30 an dem zweiten Armabschnitt 10b angelenkt. Die beiden hydraulischen Zylinder 28a, 28b erstrecken sich im Beispielsfall parallel zwischen den Längsträgern 4 des Ba - sisrahmens 1 und sind mit ihren Zylindergehäuseenden 32 an dem Basisrahmen 1 angelenkt. Die Zylinder 28a und 28b können gleicher Bauart sein. Sie sind über dem Basisrahmen 1 und den zweiten Armabschnitt 10b mechanisch zum Gleichlauf gekoppelt.

Beim Durchfahren des gesamten Verfahrwinkels ändern sich allerdings wie in den Figuren 3a - 3c ersichtlich, die Winkel zwischen Auslegerarm und Kolbenstangen 60a, 60b der Hydraulikzylinder 28a, 28b. Ferner ändert sich damit die Richtung, in der jeweils effektiv eine Kraft ausgeübt werden muss, um den Auslegerarm 10 bzw. den Armabschnitt 10b zu bewegen. Dies hat zur Folge, dass insbesondere bei kleinen Winkeln zwischen Auslegerarm 10 und Basisrahmen 1 eine große Kraft durch die Hydraulikzylinder erzeugt werden muss, während bei größer werdendem Winkel zwischen Basisrahmen 1 und Auslegerarm 10, also bei größer werdendem Verfahrwinkel, die Kraft geringer wird, denn die Kolbenstangen 60a, 60b sind nahezu unmittelbar in die Richtung ausgerichtet, in die die Kraft ausgeübt werden muss, um den Auslegerarm 10 bzw. den Armabschnitt 10b weiterzubewegen. Bei noch größer werdendem Verfahrwinkel ändert sich dies wiederum und die von den Hydraulikzylindern 28a, 28b auszuübende Kraft wird wieder größer.

Dies ist insbesondere anhand den Figuren 3a - 3c ersichtlich. Am Anfang des Abrollvorgangs des Behälters 20 in Figur 3a muss der Auslegerarm 10 im Wesentlichen nach oben gedrückt werden, während die Zylinder 28a, 28b im Wesentlichen in seitlicher Richtung eine Kraft ausüben. Aufgrund des Winkels zwischen erwünschter Kraftrichtung und tatsächlicher Kraftrich - tung muss die Kraft entsprechend groß sein, um den den Behälter 20 tragenden Armabschnitt 10b anzuheben. Bewegt sich der Armabschnitt 10b weiter, nähert er sich der Situation in Figur 3b an, in der der Armabschnitt 10b im Wesentlichen bezogen auf die Figur nach rechts verschoben werden muss, womit die ebenfalls im Wesentlichen nach rechts erfolgende Kraftwirkung der Hydraulikzylinder 28a, 29b besonders effizient ist bzw. sie müssen jetzt nur noch eine geringere Kraft aufbringen als in Figur 3a. Bei noch wei - terem Ausfahren des Verfahrwinkels hin zu Figur 3c wird die Differenz der gewünschten Kraftrichtung und der durch die Hydraulikzylinder 28a, 28b be - wirkten Kraftrichtung wieder ungünstiger, denn der Armabschnitt 10b wird durch das an dem Haken 16 angreifende Gewicht bzw. die dort angreifende Gewichtskraft des Behälters 20 nach unten gezogen, welchem die Hydraulikzylinder 28a, 28b durch eine Kraftwirkung im Wesentlichen nach links ge - richtet entgegenwirken müssen, um ein ausreichend gedämpftes Absetzen sicherzustellen.

Damit lässt sich in vorteilhafter Weise der Aufbau verbessern, indem die Steuereinrichtung zur Steuerung der Hydraulikzylinder 28a, 28b dafür einge - richtet ist, die Ansteuerung der Hydraulikzylinder 28a, 28b in Abhängigkeit von dem aktuellen Verfahrwinkel zu modifizieren. Dies kann insbesondere so erfolgen, dass bei Verfahrwinkeln, die eher dem in Figur 3a gezeigten Fall nahe sind, die Steuereinrichtung dazu eingerichtet ist, die Hydraulikzy - linder 28a, 28b in einem Normalbetrieb zu fahren, bei dem möglichst eine große Kraft ausgeübt wird. Hingegen kann bei Verfahrwinkeln, die eher dem in Figur 3b gezeigten Fall nahe sind, die Steuereinrichtung dazu eingerichtet sein, die Hydraulikzylinder in einem Eilgang zu betreiben, bei dem zwar kei - ne große Kraft ausgeübt wird, aber dafür die Bewegung schnell erfolgt.

Um diese winkelabhängige Ansteuerung zu realisieren, umfasst der erfindungsgemäße Aufbau 2 einen Winkelsensor 5, der an dem Armabschnitt 10b angeordnet ist. In anderen Ausführungsformen kann der Winkelsensor auch in dem Armabschnitt 10b angeordnet werden. Ferner kann in weiteren Ausführungsformen der Winkelsensor am Hakenabschnitt 14 oder am Haken 16 angeordnet werden.

Die Steuereinrichtung ist dann ferner dazu eingerichtet, in der in Figur 1 bzw. Figur 3a gezeigten Grundstellung bzw. Nullpunktsstellung den vom Winkelsensor 5 gemessenen Winkel zu empfangen und als relativen Win - kelnullpunktswert für den weiteren Betrieb zu verwenden. Die Steuereinrich - tung ist dann ferner dazu eingerichtet, für den weiteren Betrieb die Differenz zwischen dem aktuell vom Winkelsensor 5 gemessenen Winkelwert und dem relativen Winkelnullpunktswert zu verwenden, wobei entsprechend wie oben beschrieben ein Normalbetrieb oder ein Eilgang von der Steuereinrich - tung betrieben wird.

Besonders vorteilhaft ist dabei, dass durch die Bestimmung des relativen Winkelnullpunktswertes in der Nullpunktsstellung eine geneigte Position des Aufbaus 2 bzw. des Fahrzeugs 3 in Längsrichtung kompensiert werden kann. Denn wenn anstelle der in Figuren 3a - 3c gezeigten Fälle das Fahrzeug 3 an einer Steigung steht, würde sich wenn rein der aktuell vom Winkelsensor 5 gemessene Wert zur Bestimmung, ob Normalbetrieb oder Eilgang geschaltet werden soll, genutzt würde, ein Fehler ergeben, so dass beispielsweise der Eilgang zu früh geschaltet wird, da der eigentlich den Winkel zur Schwerkraftsrichtung bestimmende Winkelsensor 5 nicht den Winkel zum Grundrahmen 1 bzw. Fahrzeug 3 direkt bestimmt.

Ebenfalls kann mit Hilfe dieser Winkelmessung und Winkelnullpunktsbestimmung die Steuereinrichtung dafür ausgelegt sein, einen Endlagendämpfungsbetrieb zu fahren, welcher entsprechend bei Verfahrwinkeln erfolgt, die nahe den in den Figuren 3a und 3c gezeigten sind. Ein solcher Endlagen - dämpfungsbetrieb besteht darin, dass die Hydraulikzufuhr zu den beiden Hydraulikzylindern 28a und 28b langsam gedrosselt wird, was in der Wirkung einem langsamen Absetzen des Behälters 20 bei der Bewegung hin zu dem in Figur 3a oder Figur 3c gezeigten Fall entspricht. Hierbei ist die Erfassung des relativen Winkelnullpunktswertes ebenfalls besonders vorteilhaft, denn wieder ergäbe sich bei einer reinen Nutzung eines Winkelsensors 5 ein Feh - ler, der bei entsprechender Neigung des Grundrahmens 1 bzw. des Fahrzeugs 3 gegenüber der Schwerkraftrichtung zu einem zu frühen Beginn des Endlagendämpfungsbetriebs, was zu einem langsameren Auf- und Abladen des Behälters 20 führen würde, oder zu einem zu späten oder gar keinem Endlagendämpfungsbetrieb führen würde, was die Gefahr einer Beschädigung durch das Gewicht des Behälters 20 für die anderen Elemente des Fahrzeugs 3 oder auch für den Boden, auf dem der Behälter 20 abgesetzt werden soll, bedeuten kann.

Der Winkelsensor 5 kann dabei insbesondere ein Beschleunigungssensor sein, wie er im Stand der Technik bekannt ist.

Ferner umfasst der erfindungsgemäße Aufbau 2 einen Näherungssensor 7, in dem gezeigten Ausführungsbeispiel an einer Querstrebe 6 des Grundrahmens 1. Die Steuereinrichtung ist dazu eingerichtet, anhand des Signals von diesem Näherungssensor 7 eine Bestimmung des relativen Winkelnullpunktswertes durchzuführen. Ein solcher Näherungssensor kann, da der Aufbau im Allgemeinen ein metallisches Material umfasst, insbesondere als induktiver Näherungssensor ausgelegt werden, also als eine Induktivität, in der entsprechend ein Strom induziert wird, wenn der Armabschnitt 10b in die Grundstellung kommt. Dafür kann der Armabschnitt 10b zusätzlich entsprechende Materialien umfassen, damit es zu einer ausreichenden Induktion kommt.

Der Winkelsensor 5 ist bevorzugt an dem Armabschnitt 10b angeordnet, da er dann in vergleichbarer Weise für einen Kippbetrieb und einen Abrollbetrieb zur Erfassung des relativen Winkelnullpunktswertes und Bestimmung der Winkeldifferenz verwendet werden kann. Die Steuereinrichtung ist hierzu jeweils ähnlich eingerichtet, insbesondere wie für den vorher beschriebe - nen Fall, nur dass entsprechend andere Winkelbereiche für den Normalbetrieb und den Eilbetrieb vorgesehen sein können.

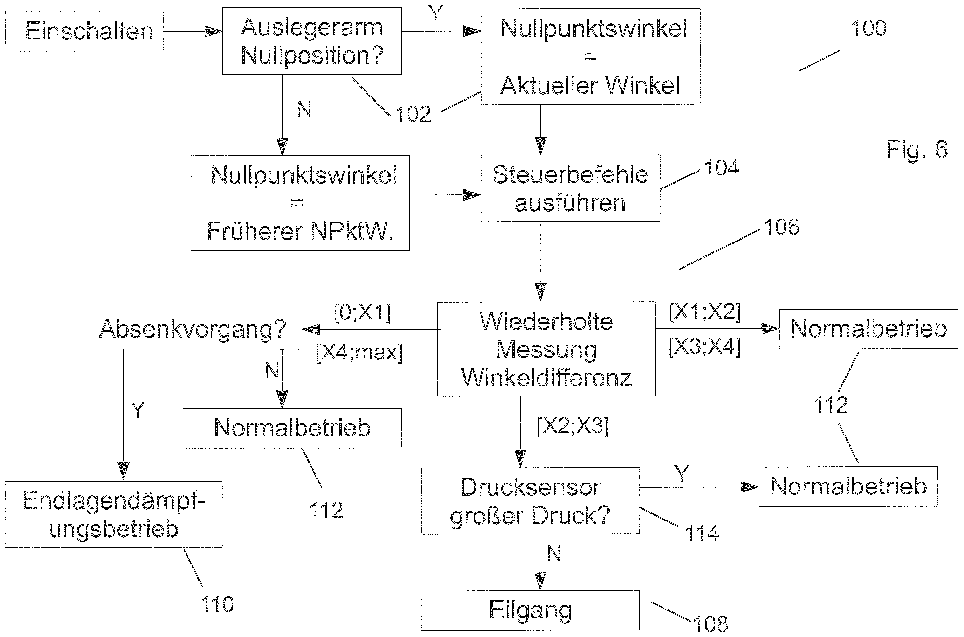

Figur 6 dient zur Illustration eines erfindungsgemäßen Verfahrens 100 zum Betrieb eines Aufbaus, insbesondere eines erfindungsgemäßen Aufbaus bzw. entsprechenden Fahrzeugs, wobei die Figur 6 als Logikschaltbild der Einrichtung der Steuereinrichtung 100 anzusehen ist.

Wie gezeigt, wird mit Einschalten abgefragt, ob der Auslegerarm in der Null - position ist, und wenn ja (Y) wird der entsprechende Winkel als neuer Null - punktswinkel bzw. neuer relativer Winkelnullpunktswert verwendet (Schritt 102). Falls der Auslegerarm beim Einschalten nicht in der Nullposition ist, ist die Verwendung des bisherigen Nullpunktswinkels vorgesehen. Dieser Aspekt kann in anderen Ausführungsbeispielen der Erfindung auch alternative Folgen haben, beispielsweise dass die Hydraulikzylinder 28a, 28b aus Sicherheitsgründen nur im Normalbetrieb betrieben werden, solange bis wieder eine korrekte Nullpunktswinkelbestimmung ausführbar ist.

Nach der Bestimmung des Nullpunktswinkels geht die Steuereinrichtung 100 in den Modus über, dass sie Steuerbefehle ausführt (Schritt 104).

Dabei wird sie wiederholte Messungen der Winkeldifferenz durchführen (Schritt 106), um entsprechend den geeigneten Betrieb der Hydraulikzylin - der 28a, 28b sicherzustellen. Dafür ist im vorliegenden Ausführungsbeispiel der gesamte Verfahrwinkel des erfindungsgemäßen Aufbaus 2 für den Abrollvorgang in 5 Winkelbereiche unterteilt. Die Winkelbereiche sind dabei [0; X1], [X1; X2], [X2; X3], [X3; X4] und [X4; max]. Dabei stehen "0" und "max" für die Winkeldifferenzen, die der Grundstellung bzw. Nullpunktsstellung und der Auslegerstellung entsprechen, also für die Grenzen des gesamten Verfahrwinkels. Die anderen Werte X1, X2, X3 und X4 sind entsprechend den technischen Gegebenheiten gewählt, so dass in den entsprechend technischen sinnvollen Bereichen ein Endlagendämpfungsbetrieb und ein Eilgang - betrieb stattfinden kann.

Die Steuereinrichtung 100 überwacht somit kontinuierlich die Winkeldiffe - renz, wobei sie im Falle, dass sie in die Bereiche [X1; X2] oder [X3; X4] fällt, die Hydraulikzylinder 28a, 28b im Normalbetrieb 112 ansteuert. Diese Win - keldifferenzen entsprechen im Wesentlichen Situationen, die bei einer Betrachtung der Figuren 3a - 3c als kontinuierlicher Bewegungsablauf zwi - schen den Figuren 3a und 3b und zwischen den Figuren 3b und 3c lägen. Fällt die Winkeldifferenz in die Bereiche [0; X1] oder [X4; max], dann prüft die Steuereinrichtung 100 im Rahmen des erfindungsgemäßen Verfahrens noch, ob ein Absenkvorgang stattfindet. Wenn ja, dann erfolgt der Betrieb der Hydraulikzylinder 28a, 28b in einem Endlagendämpfungsbetrieb 110, der darauf ausgelegt ist, den Behälter 20 entsprechend langsam auf dem Grundrahmen 1 bzw. dem Fahrzeug 3 bzw. dem Boden hinter dem Fahrzeug abzusetzen. Findet hingegen kein Absenkvorgang statt, was leicht aus der aktuellen Winkeldifferenz und der Richtung der Bewegung des Auslegerarms 10 bestimmbar ist, werden die Hydraulikzylinder 28a, 28b im Normalbetrieb 112 angesteuert, da sie in diesem Falle eine große Kraft ausüben müssen, um den Behälter 20 anzuheben.

Fällt die Winkeldifferenz in den Bereich [X2; X3], dann prüft die Steuerein - richtung 100 im Rahmen des erfindungsgemäßen Verfahrens, ob der von einem Drucksensor an einem oder an beiden Hydraulikzylindern 28a, 28b gemessene Druck bzw. Druckdifferenz größer ist als ein bestimmter Grenzwert (Schritt 114). Wenn ja, dann bedeutet das, dass das Gewicht des Behälters 20 für einen Eilgang zu groß ist, weshalb die Steuereinrichtung 100 dann die Hydraulikzylinder 28a, 28b in einem Normalbetrieb 112 betreibt. Ist der Druck hingegen kleiner als die entsprechende Grenze, dann betreibt die Steuereinrichtung 100 im Rahmen des erfindungsgemäßen Verfahrens die Hydraulikzylinder 28a, 28b in einem Eilgang 108. Es ist auch darauf hinzu - weisen, dass die Werte X1, X2, X3 und X4 in einer Alternative des erfindungsgemäßen Verfahrens 100 bzw. in einer alternativen erfindungsgemäßen Steuereinrichtung 100 in Abhängigkeit des von dem Drucksensor gemessenen Drucks variiert werden können, um präzise in Abhängigkeit von dem Gewicht des Behälters 20 einen möglichst umfangreichen Betrieb im Eilgang 108 zu ermöglichen. Ferner ist darauf hinzuweisen, dass für den Kippvorgang oder auch für die Nutzung bei einem Absetzkipper entsprechend andere Winkelbereiche und insbesondere auch eine andere Zahl von Winkelbereichen festgelegt werden kann. Beispielsweise genügen bei einem Kippvorgang im Allgemeinen drei Winkelbereiche, da der Kippvorgang spä - testens mit dem Erreichen einer vertikalen Stellung des Behälters 20 beendet wäre. Dementsprechend wäre für den Endlagendämpfungsbetrieb und dem Normalbetrieb jeweils nur ein Winkelbereich ausreichend. Diese Winkelbereiche können sich insbesondere auch bei Kippvorgang und Abrollvorgang unterscheiden bzw. unterschiedlich eingestellt sein bzw. die Steuerein - richtung 100 kann für die jeweiligen Vorgänge unterschiedlich eingerichtet sein.

## Patentansprüche

1. Aufbau (2) für Wechselbehälter (20) für ein Lastentransportfahrzeug (3) umfassend einen Grundrahmen (1) und mindestens einen relativ zum Grundrahmen (1) beweglichen Auslegerarm (10) zum Abladen und/oder Kippen eines Behälters (20), mindestens eine Betätigungsvorrichtung (28a, 28b) zum Ausüben einer Kraft auf den mindestens einen Auslegerarm (10), eine Steuereinrichtung (100) zur Steuerung der mindestens einen Betätigungsvorrichtung (28a, 28b) und eine Sensoranordnung (5, 7), wobei die Sensoranordnung einen Winkelsensor (5) zur Messung des Winkels bzw. der Neigung gegenüber dem Erdschwerefeld umfasst und wobei die Steuereinrichtung (100) dafür eingerichtet ist, in einer Nullpunktsstellung des Auslegerarms (10) den vom Winkelsensor gemessenen Winkel als einen relativen Winkelnullpunktswert zu erfassen (102) und eine Steuerung der mindestens einen Betätigungsvorrichtung (28a, 28b) in Abhängigkeit von der Winkeldifferenz des vom Winkelsensor (5) gemessenen Winkels und des Winkelnullpunktwertes zu variieren, wobei die mindestens eine Betätigungsvorrichtung (28a, 28b) mindestens hydraulische Zylinder (28a, 28b) umfasst, wobei der Aufbau (2) eine von der Steuerung (100) ansteuerbare Druckfluidquelle oder mit einer Druckfluidquelle verbindbare Druckleitung umfasst, die die hydraulischen Zylinder (28a, 28b) mit Hydraulikfluid unter Druck versorgen kann, um den mindestens einen Auslegerarm (10) zu bewegen, **dadurch gekennzeichnet, dass** die mindestens eine Betätigungsvorrichtung (28a, 28b) mindestens zwei hydraulische Zylinder (28a, 28b) umfasst, wobei zur schnellen Bewegung in einem Eilgang (108) die Steuerung (100) die Druckfluidquelle so ansteuern kann, dass die Versorgung mit Hydraulikfluid zu allen Hydraulikzylindern (28b) bis auf einen Eilhydraulikzylinder (28a) verringert und/oder gesperrt ist und für den einen Eilhydraulikzylinder (28a) erhöht ist.

2. Aufbau (2) für Wechselbehälter (20) nach Anspruch 1 oder nach dem Oberbegriff des Anspruchs 1, **dadurch gekennzeichnet, dass** die Steuerung (100) dazu eingerichtet ist, die Versorgung mit Hydraulikfluid für alle hydraulischen Zylinder (28a, 28b) gleichmäßig zu verringern, um ein stoßreduziertes Absetzen eines Behälters in einem Endlagendämpfungsbetrieb (110) zu realisieren.

3. Aufbau (2) nach Anspruch 1 oder 2, **dadurch gekennzeichnet, dass** die Nullpunktsstellung des Auslegerarms (10) die Position ist, bei der Auslegerarm (10) dem Grundrahmen (1) am nächsten ist und/oder bei der der Winkel zwischen Auslegerarm (10) und Grundrahmen (1) minimal ist.

4. Aufbau (2) nach einem der vorherigen Ansprüche, **dadurch gekennzeichnet, dass** die Steuereinrichtung (100) dazu eingerichtet ist, die Steuerung der mindestens einen Betätigungsvorrichtung (28a, 28b) so zu variieren, dass die Geschwindigkeit der Bewegung des Auslegerarms (10) in Abhängigkeit von der Winkeldifferenz variiert wird.

5. Aufbau (2) nach einem der vorherigen Ansprüche, **dadurch gekennzeichnet, dass** der Aufbau Bedienelemente oder Mittel zur kabelbasierten oder kabellosen Verbindung mit Bedienelementen zur Steuerung der Steuereinrichtung (100) umfasst, wobei die Bedienelemente oder die Mittel so eingerichtet und mit der Steuereinrichtung (100) verbunden sind, dass durch die Bedienelemente ein Benutzer die Bewegung des Auslegerarms (10) steuern kann und/oder eine Erfassung des Winkelnullpunktwerts auslösen kann.

6. Fahrzeug (3) umfassend mindestens einen Aufbau (2) nach einem der vorhergehenden Ansprüche.

7. Fahrzeug (3) nach Anspruch 6, wobei der Aufbau (2) Teil des Fahrzeugs ist.

8. Verfahren (100) zum Betrieb eines Aufbaus (2) eines Fahrzeugs gemäß dem Oberbegriff des Anspruchs 1 und/oder gemäß einem der vorhergehenden Ansprüche 1 oder 2, umfassend die Schritte:
Erfassen (102) des von einem zur Messung des Winkels bzw. der Neigung gegenüber dem Erdschwerefeld ausgelegten Winkelsensor (5) der Sensoranordnung (5, 7) gemessenen Winkels in einer Nullpunktsstellung des Auslegerarms (10) als einen relativen Winkelnullpunktswert;
Betätigen (104) der mindestens einen Betätigungsvorrichtung zur Bewegung des mindestens einen Auslegerarms (10); und
Steuerung (106) der Bewegung des mindestens einen Auslegerarms (10) in Abhängigkeit von der Winkeldifferenz des vom Winkelsensor (5) aktuell gemessenen Winkels und des Winkelnullpunktwertes,
**dadurch gekennzeichnet, dass** das Verfahren ferner den Schritt umfasst:
Unterteilung eines gesamten Verfahrwinkels des Auslegerarms (10) gegenüber dem Grundrahmen (1) in mindestens drei Bereiche ([0;X1], [X1;X2], [X2;X3], [X3;X4], [X4; Max]), wovon mindestens einer ein Endlagendämpfungsbereich ([0;X1],[X4;Max]), mindestens einer ein Normalbetriebsbereich ([X1;X2],[X3;X4]) und mindestens einer ein Eilgangbereich ([X2;X3]) ist,
wobei die Steuerung der Bewegung in Abhängigkeit von der Winkeldifferenz so ausgeführt wird, dass die Bewegung in einem Eilgang (108) betrieben werden kann, wenn die Winkeldifferenz in den Eilgangbereich ([X2;X3]) fällt, dass die Bewegung in einem Endlagendämpfungsbetrieb (110), wenn die Winkeldifferenz in den Endlagendämpfungsbereich ([0;X1],[X4;Max]) fällt, und dass die Bewegung in einem Normalbetrieb (112) betrieben werden kann, wenn die Winkeldifferenz in den Normalbetriebsbereich ([X1;X2],[X3;X4]) fällt und/oder keine andere Betriebsart verwendet wird.

9. Verfahren (100) nach Anspruch 8, **dadurch gekennzeichnet, dass** der Winkelnullpunktswert automatisch erfasst wird, wenn der Auslegerarm (10) in der Nullpunktsstellung ist.

10. Verfahren (100) nach einem der Ansprüche 8 oder 9, ferner umfassend den Schritt:
Erfassen (114) eines von einem Drucksensor gemessenen Drucks und/oder einer vom Drucksensor gemessenen Druckdifferenz eines hydraulischen Zylinders (28a),
wobei der Eilgangbereich in Abhängigkeit von dem gemessenen Druck variiert wird, wobei er bevorzugt bei umso größeren Druck umso kleiner ist und insbesondere auch verschwinden kann.

## Claims

1. Structure (2) for interchangeable containers (20) for a load transport vehicle (3), comprising a base frame (1) and at least one extension arm (10) which is movable relative to the base frame (1) in order to unload and/or tilt a container (20), at least one actuation device (28a, 28b) for exerting a force on the at least one extension arm (10), a control apparatus (100) for controlling the at least one actuation device (28a, 28b), and a sensor arrangement (5, 7), the sensor arrangement comprising an angle sensor (5) for measuring the angle or the inclination relative to the Earth's gravitational field, and the control apparatus (100) being designed to detect (102) the angle measured by the angle sensor as a relative zero point value of the angle when the extension arm (10) is in a zero position and to vary control of the at least one actuation device (28a, 28b) depending on the angular difference of the angle measured by the angle sensor (5) and of the zero point value of the angle, the at least one actuation device (28a, 28b) comprising at least hydraulic cylinders (28a, 28b), the structure (2) comprising a pressurised fluid source which can be controlled by the controller (100) or a pressure line which can be connected to a pressurised fluid source, which line can supply the hydraulic cylinders (28a, 28b) with hydraulic fluid under pressure in order to move the at least one extension arm (10), **characterised in that** the at least one actuation device (28a, 28b) comprises at least two hydraulic cylinders (28a, 28b), the controller (100) being able to control the pressurised fluid source, for quick movement in a rapid traverse (108), such that the supply of hydraulic fluid to all hydraulic cylinders (28b), except for one rapid hydraulic cylinder (28a), is reduced and/or blocked, and the supply to the one rapid hydraulic cylinder (28a) is increased.

2. Structure (2) for interchangeable containers (20) according to claim 1 or according to the preamble of claim 1, **characterised in that** the controller (100) is designed to evenly reduce the supply of hydraulic fluid to all the hydraulic cylinders (28a, 28b) in order to set down a container in a shock-reduced manner in an end position damping operation (110).

3. Structure (2) according to either claim 1 or claim 2, **characterised in that** the zero position of the extension arm (10) is the position in which the extension arm (10) is closest to the base frame (1) and/or in which the angle between the extension arm (10) and the base frame (1) is minimal.

4. Structure (2) according to any of the preceding claims, **characterised in that** the control apparatus (100) is designed to vary the control of the at least one actuation device (28a, 28b) such that the speed of movement of the extension arm (10) is varied depending on the angular difference.

5. Structure (2) according to any of the preceding claims, **characterised in that** the structure comprises operating elements or means for cable-based or cable-less connection having operating elements for controlling the control apparatus (100), the operating elements or the means being designed and connected to the control apparatus (100) such that a user can control the movement of the extension arm (10) using the operating elements and/or can trigger a detection of the zero point value of the angle.

6. Vehicle (3) comprising at least one structure (2) according to any of the preceding claims.

7. Vehicle (3) according to claim 6, wherein the structure (2) is part of the vehicle.

8. Method (100) for operating a structure (2) of a vehicle according to the preamble of claim 1 and/or according to one of the preceding claims 1 or 2, comprising the steps:
detecting (102) the angle measured by an angle sensor (5) of the sensor arrangement (5, 7) in a zero position of the extension arm (10) as a relative zero point value of the angle, which sensor is designed to measure the angle or the inclination relative to the Earth's gravitational field;
actuating (104) the at least one actuation device to move the at least one extension arm (10); and
controlling (106) the movement of the at least one extension arm (10) depending on the angular difference between the angle currently measured by the angle sensor (5) and the zero point value of the angle, **characterised in that** the method also comprises the step of: subdividing a total travel angle of the extension arm (10) relative to the base frame (1) into at least three ranges ([0;X1], [X1;X2], [X2;X3], [X3;X4], [X4; Max]), of which at least one is an end position damping range ([0;X1], [X4;Max]), at least one is a normal operating range ([X1;X2], [X3;X4]), and at least one is a rapid traverse range ([X2;X3]), the control of the movement depending on the angular difference being carried out such that the movement can be operated in a rapid traverse (108) when the angular difference falls within the rapid traverse range ([X2; X3]), that the movement is in an end position damping mode (110) when the angular difference falls within the end position damping range ([0;X1], [X4;Max]), and that the movement can be operated in a normal mode (112) when the angular difference falls in the normal operating range ([X1;X2], [X3,X4]) and/or no other operating mode is used.

9. Method (100) according to claim 8, **characterised in that** the zero point value of the angle is automatically detected when the extension arm (10) is in the zero position.

10. Method (100) according to either claim 8 or claim 9, also comprising the step:
detecting (114) a pressure measured by a pressure sensor and/or a pressure difference of a hydraulic cylinder (28a) measured by the pressure sensor, wherein the rapid traverse range is varied depending on the measured pressure, wherein the greater the pressure is, the smaller the range preferably is, which in particular can also disappear.

## Revendications

1. Structure (2) pour contenants interchangeables (20) pour un véhicule de transport de charges (3) comprenant un cadre de base (1) et au moins un bras formant flèche (10) mobile par rapport au cadre de base (1), servant à décharger et/ou à faire basculer un contenant (20), au moins un dispositif d'actionnement (28a, 28b) servant à exercer une force sur l'au moins un bras formant flèche (10), un système de commande (100) servant à commander l'au moins un dispositif d'actionnement (28a, 28b) et un ensemble de capteurs (5, 7), dans laquelle l'ensemble de capteurs comprend un capteur d'angle (5) servant à mesurer l'angle ou l'inclinaison par rapport au champ gravitationnel et dans laquelle le système de commande (100) est configuré pour détecter (102) dans une position de point zéro du bras formant flèche (10) l'angle mesuré par l'angle de capteur en tant qu'une valeur de point zéro d'angle relative et pour varier une commande de l'au moins un dispositif d'actionnement (28a, 28b) en fonction de la différence d'angle de l'angle mesuré par le capteur d'angle (5) et la valeur de point zéro d'angle, dans laquelle l'au moins un dispositif d'actionnement (28a, 28b) comprend au moins des vérins (28a, 28b) hydrauliques, dans laquelle la structure (2) comprend une source de fluide sous pression pouvant être pilotée par la commande (100) ou un conduit de pression pouvant être relié à une source de fluide sous pression, qui peut alimenter en fluide hydraulique sous pression les vérins (28a, 28b) hydrauliques pour déplacer l'au moins un bas formant flèche (10), **caractérisée en ce que** l'au moins un dispositif d'actionnement (28a, 28b) comprend au moins deux vérins (28a, 28b) hydrauliques, dans laquelle aux fins du déplacement rapide à une vitesse rapide (108), la commande (100) peut piloter la source de fluide sous pression de telle sorte que l'alimentation en fluide hydraulique vers tous les vérins hydrauliques (28b) à l'exception d'un vérin hydraulique rapide (28a) est réduite et/ou bloquée et est augmentée pour ledit un vérin hydraulique rapide (28a).

2. Structure (2) pour contenants interchangeables (20) selon la revendication 1 ou selon le préambule de la revendication 1, **caractérisée en ce que** la commande (100) est configurée pour réduire de manière homogène l'alimentation en fluide hydraulique pour tous les vérins (28a, 28b) hydrauliques afin de réaliser un dépôt à chocs réduits d'un contenant dans un mode de fonctionnement à amortissement de fin de course (110).

3. Structure (2) selon la revendication 1 ou 2, **caractérisée en ce que** la position de point zéro du bras formant flèche (10) est la position, dans laquelle le bras formant flèche (10) est le plus proche du cadre de base (1) et/ou dans laquelle l'angle entre le bras formant flèche (10) et le cadre de base (1) est minimal.

4. Structure (2) selon l'une quelconque des revendications précédentes, **caractérisée en ce que** le système de commande (100) est mis au point pour varier la commande de l'au moins un dispositif d'actionnement (28a, 28b) de telle sorte que la vitesse du déplacement du bras formant flèche (10) varie en fonction de la différence d'angle.

5. Structure (2) selon l'une quelconque des revendications précédentes, **caractérisée en ce que** la structure comprend des éléments d'utilisation ou des moyens destinés à être reliés de manière filaire ou sans fil à des éléments d'utilisation servant à commander le système de commande (100), dans laquelle les éléments d'utilisation ou les moyens sont mis au point et sont reliés au système de commande (100) de telle sorte qu'un utilisateur peut commander le déplacement du bras formant flèche (10) par les éléments d'utilisation et/ou peut déclencher une détection de la valeur de point zéro d'angle.

6. Véhicule (3) comprenant au moins une structure (2) selon l'une quelconque des revendications précédentes.

7. Véhicule (3) selon la revendication 6, dans lequel la structure (2) fait partie du véhicule.

8. Procédé (100) servant à faire fonctionner une structure (2) d'un véhicule selon le préambule de la revendication 1 et/ou selon l'une quelconque des revendications 1 ou 2 précédentes, comprenant les étapes suivantes :
la détection (102) de l'angle mesuré par un capteur d'angle (5), conçu pour mesurer l'angle ou l'inclinaison par rapport au champ gravitationnel, de l'ensemble de capteurs (5, 7) dans une position de point zéro du bras formant flèche (10) en tant qu'une valeur de point zéro d'angle relative ;
l'actionnement (104) de l'au moins un dispositif d'actionnement servant à déplacer l'au moins un bras formant flèche (10) ; et
la commande (106) du déplacement de l'au moins un bras formant flèche (10) en fonction de la différence d'angle de l'angle mesuré de manière instantanée par le capteur d'angle (5) et de la valeur de point zéro d'angle,
**caractérisé en ce que** le procédé comprend en outre l'étape suivante :
la division d'un angle de déplacement total du bras formant flèche (10) par rapport au cadre de base (1) en au moins trois zones ([0 ; X1], [X1 ; X2], [X2 ; X3], [X3 ; X4], [X4 ; Max]), dont au moins une est une zone à amortissement de fin de course ([0 ; X1]; [X4 ; Max]), au moins une est une zone de fonctionnement normal ([X1 : X2], [X3 ; X4]) et au moins une est une zone à vitesse rapide ([X2 ; X3]),
dans lequel la commande du déplacement est effectuée en fonction de la différence d'angle de telle sorte que le déplacement peut être opéré à une vitesse rapide (108) quand la différence d'angle relève de la zone à vitesse rapide ([X2 ; X3]), que le déplacement peut être opéré dans un fonctionnement à amortissement de fin de course (110) quand la différence d'angle relève de la zone à amortissement de fin de course ([0 ; X1], [X4 ; Max]), et que le déplacement peut être opéré dans un fonctionnement normal (112) quand la différence d'angle relève de la zone de fonctionnement normal ([X1; X2], [X3 ; X4]) et/ou aucun autre type de fonctionnement n'est utilisé.

9. Procédé (100) selon la revendication 8, **caractérisé en ce que** la valeur de point zéro d'angle est détectée de manière automatique quand le bras formant flèche (10) est dans la position de point zéro.

10. Procédé (100) selon l'une quelconque des revendications 8 ou 9, comprenant en outre l'étape suivante :
la détection (114) d'une pression mesurée par un capteur de pression et/ou d'une différence de pression, mesurée par le capteur de pression, d'un vérin (28a) hydraulique,
dans lequel la zone à vitesse rapide varie en fonction de la pression mesurée, dans lequel de manière préférée plus la pression est grande et plus elle est petite et en particulier peut également disparaître.
